## Europäisches Patentamt

## European Patent Office

## Office européen des brevets

(19)

(11) Veröffentlichungsnummer: **0 063 681**
**B1**

(12) **EUROPÄISCHE PATENTSCHRIFT**

(45) Veröffentlichungstag der Patentschrift:
**11.09.85**

(51) Int. Cl.⁴: **G 21 C 17/06, G 01 N 29/00**

(21) Anmeldenummer: **82101577.3**

(22) Anmeldetag: **02.03.82**

(54) **Einrichtung und Verfahren zum Auffinden defekter Brennstabhüllrohre.**

(30) Priorität: **29.04.81 DE 3116978**

(43) Veröffentlichungstag der Anmeldung:
**03.11.82 Patentblatt 82/44**

(45) Bekanntmachung des Hinweises auf die Patenterteilung:
**11.09.85 Patentblatt 85/37**

(84) Benannte Vertragsstaaten:
**AT BE CH DE FR IT LI SE**

(56) Entgegenhaltungen:
**FR - A - 2 341 183**
**FR - A - 2 373 059**
**FR - A - 2 389 973**
**US - A - 3 901 090**
**US - A - 4 036 686**

(73) Patentinhaber: **BROWN BOVERI REAKTOR GmbH, Dudenstrasse 44, D-6800 Mannheim 1 (DE)**

(72) Erfinder: **Der Erfinder hat auf seine Nennung verzichtet**

(74) Vertreter: **Dahlmann, Gerhard, Dipl.-Ing. et al, c/o Brown Boveri & Cie., AG Zentralbereich ZPT/P Postfach 351, D-6800 Mannheim (DE)**

BUNDESDRUCKEREI BERLIN

**Beschreibung**

Die Erfindung betrifft eine Einrichtung zum Auffinden defekter Brennstabhüllrohre aus zu kompletten Brennelementen zusammengefaßten Brennstabbündeln wassergekühlter Kernreaktoren, wobei die Hüllrohre in senkrecht zueinander verlaufenden Reihen angeordnet sind, welche Einrichtung eine Auswertestation und eine zwischen den Hüllrohren einführbare Ultraschall-Sonde umfaßt, welche Sonde die Hüllrohre von der Seite her beschallt, die Laufzeit sowie die Intensität der Ultraschallsignale auf ihrem Weg durch die Rohrwandung ermittelt und die ermittelten Signale an die Auswertestation weiterleitet.

Die Erfindung betrifft weiterhin ein Verfahren zum Auffinden defekter Brennstabhüllrohre aus zu kompletten Brennelementen zusammengefaßten Brennstabbündeln wassergekühlter Kernreaktoren, wobei die Hüllrohre in senkrecht zueinander verlaufenden Reihen angeordnet sind, wobei zwischen den Hüllrohren eine Ultraschall-Sonde eingeführt wird, die die Hüllrohre von der Seite her beschallt, die Laufzeit sowie die Intensität der Ultraschallsignale auf ihrem Weg durch die Rohrwandung ermittelt und die ermittelten Signale an eine Auswertestation weiterleitet.

Eine derartige Einrichtung und ein derartiges Verfahren ist aus dem Buch »Reaktortagung März 1980« Seite 827 bis 831 bekannt. Darin werden erste Versuchsergebnisse mit einer Ultraschallsonde beschrieben, die aus einem Sender- und Empfängerteil besteht. Die Sonde wird dabei derart durch die Räume zwischen den Rohren geführt, daß das jeweilig zu überprüfende Hüllrohr zwischen dem Sender- und dem Empfängerteil zu liegen kommt. Die von dem Empfängerteil registrierte Laufzeit des Ultraschallsignals und dessen Intensität wird von einem Schreiber aufgezeichnet. Die Auswertung der Schreiberaufzeichnungen erfordert einen nicht unerheblichen Aufwand, der durch hochqualifiziertes Personal aufgebracht werden muß. Außerdem erweist es sich als zeitraubend, das Detektieren mit nur einer Sonde vorzunehmen.

Aus der FR-A-2 341 183 ist eine kammartige Ultraschall-Prüfsonde bekannt, bei der die einzelnen Finger in gleicher Länge vom Träger auskragen. Diese Bauart ist nur für das zugehörige Verfahren einsetzbar, bei dem unter Andrückung des Fingers an ein Hüllrohr durch Federkräfte eine Resonanzbildung überwacht wird.

Dagegen ist es die Aufgabe der Erfindung bei einer Einrichtung der eingangs genannten Art, das Detektieren zu beschleunigen und die Auswertung zu vereinfachen.

Gelöst wird die Aufgabe erfindungsgemäß dadurch, daß ein Träger mit mehreren Sonden bestückt ist, daß die Sonden parallel zueinander angeordnet sind und sich in gleicher Richtung erstrecken, daß sie in unterschiedlicher Länge vom Träger auskragen und mit einer digital anzeigenden Auswerteeinheit verbunden sind.

Durch den Einsatz mehrerer Sonden wird der Prüfvorgang eines Brennelements beschleunigt. Die in verschiedener Länge auskragenden Sonden machen den Einsatz mehrerer Sonden erst möglich, da bei den engen Zwischenräumen von ca. 2 mm das direkte Nebeneinanderanordnen des Empfängerteils der einen Sonde und des Senderteils der anderen Sonde aus Platzgründen kaum zu verwirklichen wäre. Mit der digital anzeigenden Auswerteeinheit kann die Position eines defekten Brennstabes unmittelbar abgelesen werden, so daß zeitaufwendige Auswertearbeiten nicht mehr erforderlich sind. Weiterhin wird durch die versetzte Anordnung die Auswertetechnik vereinfacht. Gemäß einer bevorzugten Ausführung der Einrichtung ist der Längenunterschied der Sonden zueinander gleich dem Mittenabstand zwischen zwei nebeneinander angeordneten Hüllrohren.

Eine erfindungsgemäße Lösung der Aufgabe sieht ebenfalls ein Verfahren vor, bei dem die ermittelten Ultraschallsignale der Hüllrohre einer senkrecht zur Sonden-Fahrrichtung verlaufenden Hüllrohrreihe nacheinander ausgewertet, die Werte einer Hüllrohrreihe zwischengespeichert, mit den Mustersignalen einer unbeschädigten Hüllrohrreihe verglichen, die Vergleichswerte gespeichert und nach abgeschlossener Prüfung eines Brennelements digital dargestellt werden.

Bei der Zwischenspeicherung der Werte einer Hüllrohrreihe und dem nachfolgenden Vergleich mit den Mustersignalen dieser Reihe werden Fehlsignal wie z. B. durch Führungs- oder Instrumentierungsrohre sicher als solche erkannt, da sie auch in den Mustersignalen als Fehlsignale enthalten sind.

Eine weitere Einrichtung zur Durchführung des Verfahrens zeichnet sich dadurch aus, daß ein Träger mit mehreren Sonden bestückt ist, daß die Sonden parallel zueinander angeordnet sind und sich in gleicher Richtung erstrecken, daß die Sonden aus jeweils einem einzigen Finger bestehen, wobei in einem vorgebbaren Abstand mehrere Sender und Empfängereinheiten vorgesehen sind, wobei die Schallrichtung der Sendereinheiten und die Aufnahmerichtung der Empfängereinheiten in entgegengesetzter Richtung verlaufen und daß die Sonden mit einer digitalanzeigenden Auswerteeinheit verbunden sind.

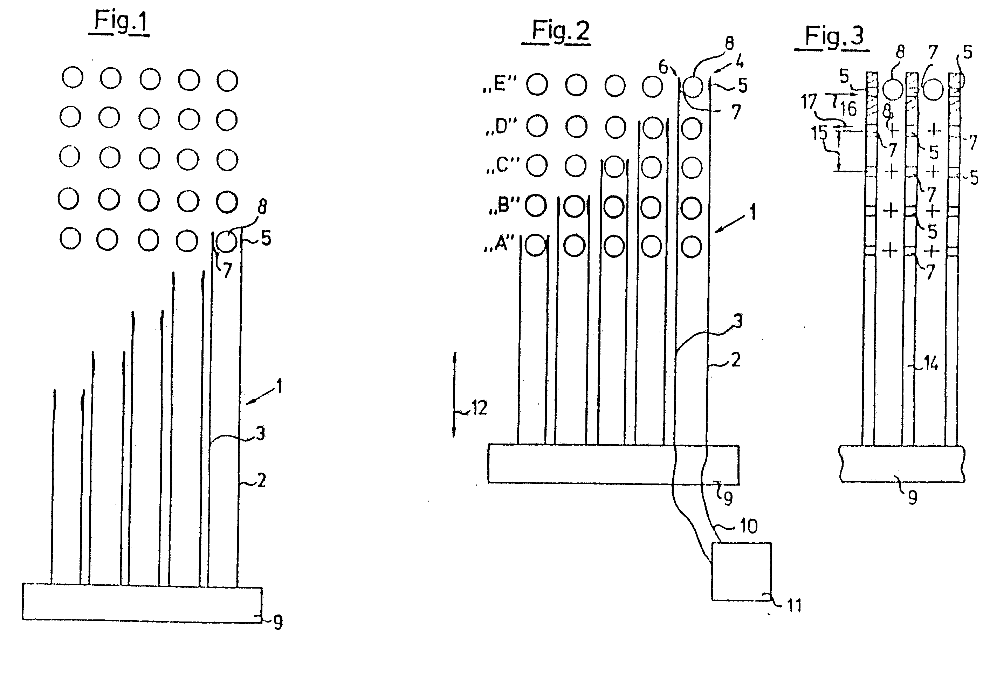

Anhand von Ausführungsbeispielen und der Fig. 1 bis 3 wird die Einrichtung und das Verfahren zum Auffinden defekter Brennstabhüllrohre beschrieben.

Gemäß Fig. 1 besteht eine Sonde 1 aus zwei Fingern 2, 3, wobei der Finger 2 an seinem freien Ende 4 den Ultraschallsignale aussendenden Senderteil 5 und der Finger 3 an seinem freien Ende 6 den Empfängerteil 7 trägt. Die Ultraschallsignale durchlaufen einen Wandbereich eines Hüllrohres 8 und gelangen dann zum Empfängerteil 7. Zeitdauer des Signalumlaufs und die Größe der Intensitätsabschwächung geben Aufschluß darüber, ob Wasser in das Innere des Hüllrohres eingedrungen ist. Aus Gründen der besseren Übersicht sind nur fünf Hüllrohrreihen »A« bis »E« mit jeweils fünf Hüllrohren 8 aufgeführt obwohl ein Brennelement in der Regel aus 15 × 15 oder mehr Brennstäben besteht. Die Finger 2, 3 sind mit einem Träger 9 verbunden. Entlang der Finger laufen Leitungsverbindungen 10 zu einer mit 11 symbolisierten Auswertestation. Der Träger 9 ist in Pfeilrichtung 12 bewegbar, so daß die Sonden 1 in die Räume 13 zwischen den Hüllrohren einführbar sind. Die Sonden kragen in unterschiedlichen Längen von dem Träger 9 aus. Der Längenunterschied zur nebengeordneten Sonde ist in den Beispielen nach Fig. 1 und 2 gleich dem Mittenabstand zwischen zwei Hüllrohren 8. Es wird dadurch, wie die verschiedenen Sondenstellungen der Fig. 1 und 2 zeigen jeweils nur ein Stab einer Reihe beschallt und ausgewertet. Gemäß Fig. 3 besteht die Sonde 1 aus einem einzigen Finger 14. Die Sender- und Empfängereinheiten sind Kristalle, die die Fingerdicke nicht überragen. Schallrichtung und Aufnahmerichtung verlaufen in entgegengesetzter Richtung.

Durch die versetzt angeordneten Ultraschallsonden werden die Ultraschallempfangssignale, nachdem sie den halben Rohrumfang des jeweiligen Hüllrohres durchlaufen haben, nacheinander ausgewertet.

Entsprechend ihrem zeitlichen Versatz können zwei oder mehrere Umlaufechos nacheinander auf einen gemeinsamen Verstärker mit Impulshöhendiskriminator geschaltet werden. Die Zuschaltung erfolgt nur während des Auftretens des Umlaufechos.

Zur Parallelauswertung einer Hüllrohrreihe werden die Umlaufechos auf den Paralleleingang eines Mikroprozessors geführt. Der Mikroprozessor vergleicht die eingetroffenen Signale der Umlaufechos mit einem abgespeicherten Signalmuster. Hierfür wird eine logische Operation mit einem mathematischen »Exclusiv-Oder« herangezogen. Das Signalmuster berücksichtigt, ob sich in der Rohrreihe eine planmäßige Fehlstelle z. B. bei Brennelementen für einen Leichtwasserreaktor ein Führungsrohr, Instrumentierungsrohr, Experimentierkanal oder ein Vollstab befindet. Der Mikroprozessor speichert die Ergebnisse der Vergleichsoperation jeder Rohrreihe. Am Ende der Auswertung aller Hüllrohre werden die Positionen der wasserbeinhaltenden Rohre von einem Drucker dokumentiert.

Bei Nichtverwendung eines Mikroprozessors erfolgt die zeitliche Steuerung der Meßwerterfassung und der Auswertung durch einen Clock-Generator. Die Umlaufechos werden auf einen Paralleleingang eines Schieberegisters gegeben, das die Signale der Umlaufechos beim Umschalten der Verstärker jeweils um eine Speicherzelle verschiebt. Nach vollständiger Erfassung einer Rohrreihe wird das Signalmuster des Schieberegisters mit dem von einem Mustergenerator erzeugten Signalmuster verglichen. Der Vergleich erfolgt in einem Exclusiv-Oder Gatter, das an seinem Ausgang unmittelbar die Fehlpositionen ausweist. Der Clock-Generator steuert den Mustergenerator auf die nächste Rohrreihe. Die Nachschaltung eines Druckers dient der Dokumentation.

Die vorgeschlagene Einrichtung ist nicht nur für die Hüllrohre eines Brennelementes zu verwenden, sondern für alle metallischen Rohre, die an ihren Enden gasdicht verschlossen sind und auf das Eindringen des sie umgebenden flüssigen Mediums, wie z. B. Wasser, überprüft werden sollen.

## Patentansprüche

1. Einrichtung zum Auffinden defekter Brennstabhüllrohre aus zu kompletten Brennelementen zusammengefaßten Brennstabbündeln wassergekühlter Kernreaktoren, wobei die Hüllrohre in senkrecht zueinander verlaufenden Reihen angeordnet sind, welche Einrichtung eine Auswertestation und eine zwischen den Hüllrohren einführbare Ultraschall-Sonde umfaßt, welche Sonde die Hüllrohre von der Seite her beschallt, die Laufzeit sowie die Intensität der Ultraschallsignale auf ihrem Weg durch die Rohrwandung ermittelt und die ermittelten Signale an die Auswertestation weiterleitet, dadurch gekennzeichnet, daß ein Träger (9) mit mehreren Sonden (1) bestückt ist, daß die Sonden parallel zueinander angeordnet sind und sich in gleicher Richtung erstrecken, daß sie in unterschiedlicher Länge vom Träger (9) auskragen und mit einer digital anzeigenden Auswerteeinheit verbunden sind.

2. Einrichtung nach Anspruch 1, dadurch gekennzeichnet, daß der Längenunterschied der Sonden (1) zueinander gleich dem Mittenabstand zwischen zwei nebeneinander angeordneten Hüllrohren ist.

3. Verfahren zum Auffinden defekter Brennstabhüllrohre aus zu kompletten Brennelementen zusammengefaßten Brennstabbündeln wassergekühlter Kernreaktoren, wobei die Hüllrohre in senkrecht zueinander verlaufenden Reihen angeordnet sind, wobei zwischen den Hüllrohren eine Ultraschall-Sonde eingeführt wird, die die Hüllrohre von der Seite her beschallt, die Laufzeit sowie die Intensität der Ultraschallsignale auf ihrem Weg durch die Rohrwandung ermittelt und die ermittelten Signale an eine Auswertestation weiterleitet, dadurch gekennzeichnet, daß die ermittelten Ultraschallsignale der Hüllrohre einer senkrecht zur Sonden-Fahrrichtung verlaufenden Hüllrohrreihe (A—E) nacheinander ausgewertet, die Werte einer Hüllrohrreihe zwischengespeichert, mit den Mustersignalen einer unbeschädigten Rohrreihe verglichen, die Vergleichswerte gespeichert und nach abgeschlossener Prüfung eines Brennelementes digital dargestellt werden.

4. Einrichtung zur Durchführung des Verfahrens nach Anspruch 3, dadurch gekennzeichnet, daß ein Träger (9) mit mehreren Sonden (1) bestückt ist, daß die Sonden parallel zueinander angeordnet sind und sich in gleicher Richtung erstrecken, daß die Sonden (1) jeweils aus einem einzigen Finger (14) bestehen, wobei in einem vorgebbaren Abstand (15) mehrere Sender- (5) und Empfängereinheiten (7) vorgesehen sind wobei die Schallrichtung (16) der Sendereinheiten (5) und die Aufnahmerichtung (17) der Empfängereinheiten (7) in entgegengesetzter Richtung verlaufen und daß die Sonden mit einer digital anzeigenden Auswerteeinheit verbunden sind.

## Claims

1. Arrangement for the detection of defective fuel rod casings of groups of fuel rods which are combined to form complete fuel elements of water-cooled nuclear reactors, the casings being disposed in rows extending perpendicular to one another, which arrangement comprises an analyser station and an ultrasonic probe capable of being introduced between the casings, which probe acoustically irradiates the casings from the side, determines the transit time as well as the intensity of the ultrasonic signals on their path through the casing wall and transmits the determined signals to the analyser station, characterized in that a carrier (9) is equipped with a plurality of probes (1), that the probes are disposed parallel to one another and extend in the same direction, and that they project with different lengths from the carrier (9) and are connected with a digitally indicating analyser.

2. Arrangement according to claim 1, characterized in that the length difference between the probes (1) is equal to the centre-to-centre distance between two adjacent casings.

3. Process for the detection of defective fuel rod casings of groups of fuel rods which are combined to form complete fuel elements of water-cooled nuclear reactors, the casings being disposed in rows extending perpendicular to one another, in which process an ultrasonic probe is introduced between the casings, which probe acoustically irradiates the casings from the side, determines the transit time as well as the intensity of the ultrasonic signals on their path through the casing wall and transmits the determined signals to an analyser station, characterized in that the determined ultrasonic signals of the casings of a row of casings (A—E) extending perpendicular to the direction of travel of the probes are successively analysed, the values for a row of casings are placed in intermediate storage and compared with the specimen signals for an undamaged row of casings, and the comparative values are stored and — when the testing of a fuel element has been completed — digitally displayed.

4. Arrangement for carrying out the process according to claim 3, characterized in that a carrier (9) is equipped with a plurality of probes (1), that the probes are disposed parallel to one another and extend in the same direction, that the probes (1) each consist of a single finger (14), a plurality of emitters (5) and receivers (7) being provided at a predeterminable spacing (15), the direction (16) of the acoustic irradiation from the emitters (5) and the detection direction (17) of the receivers (7) extending in the opposite direction, and that the probes are connected with a digitally indicating analyser.

## Revendications

1. Dispositif de détection de gaines tubulaires défectueuses de barres combustibles parmi des assemblages de barres combustibles regroupés en des éléments combustibles complets dans des réacteurs nucléaires à refroidissement par eau, les gaines tubulaires étant agencées en des rangées s'étendant perpendiculairement les unes aux autres, ledit dispositif comprenant un poste d'interprétation et une sonde à ultrasons pouvant être engagée entre les gaines tubulaires, cette sonde envoyant des ultrasons par le côté aux gaines tubulaires, déterminant la durée ainsi que l'intensité des signaux ultrasonores sur leur trajet à travers la paroi tubulaire, et transmettant les signaux ainsi déterminés au poste d'interprétation, caractérisé par le fait qu'un support (9) est garni de plusieurs sondes (1); par le fait que les sondes sont disposées parallèlement les unes aux autres et s'étendent dans la même direction; et par le fait qu'elles dépassent de longueurs différentes au-delà du support (9) et sont raccordées à une unité d'interprétation à affichage numérique.

2. Dispositif selon la revendication 1, caractérisé par le fait que la différence entre les longueurs mutuelles des sondes (1) est égale à la distance entre les centres de deux gaines tubulaires juxtaposées.

3. Procédé de détection de gaines tubulaires défectueuses de barres combustibles parmi des assemblages de barres combustibles regroupés en des éléments combustibles complets dans des réacteurs nucléaires à refroidissement par eau, les gaines tubulaires étant agencées en des rangées s'étendant perpendiculairement les unes aux autres et une sonde à ultrasons pouvant être engagée entre ces gaines tubulaires, ladite sonde envoyant par le côté des ultrasons auxdites gaines tubulaires, déterminant la durée ainsi que l'intensité des signaux ultrasonores sur leur trajet à travers la paroi tubulaire, et transmettant les signaux ainsi déterminés à un poste d'interprétation, caractérisé par le fait que les signaux ultrasonores déterminés des gaines tubulaires d'une rangée (A—E) de gaines tubulaires s'étendant perpendiculairement à la direction du déplacement des sondes sont interprétés les uns après les autres, que les valeurs relatives à une rangée de gaines tubulaires sont mémorisées provisoirement, qu'elles sont comparées aux signaux-types d'une rangée de tubes non détériorée, que les valeurs résultant de cette comparaison sont mémorisées et qu'elles sont représentées numériquement après l'achèvement du contrôle d'un élément combustible.

4. Dispositif pour la mise en oeuvre du procédé selon la revendication 3, caractérisé par le fait qu'un support (9) est garni de plusieurs sondes (1); par le fait que les sondes sont disposées parallèlement les unes aux autres et s'étendent dans la même direction; par le fait que les sondes (1) consistent à chaque fois en une seule et unique tige (14), plusieurs unités émettrices (5) et unités réceptrices (7) étant prévues à un intervalle (15) pouvant être prédéterminé, la direction d'émission (16) des unités émettrices (5) et la direction de réception (17) des unités réceptrices (7) étant opposées; et par le fait que les sondes sont raccordées à une unité d'interprétation à affichage numérique.

Fig.1

Fig.2

Fig.3

0 063 681